(19) Europäisches Patentamt / European Patent Office / Office européen des brevets

(11) **EP 4 269 182 A1**

(12) **DEMANDE DE BREVET EUROPEEN**

(43) Date de publication:
**01.11.2023 Bulletin 2023/44**

(21) Numéro de dépôt: **23170467.7**

(22) Date de dépôt: **27.04.2023**

(51) Classification Internationale des Brevets (IPC):
**B60R 19/52** (2006.01)   **B32B 3/30** (2006.01)
**G02B 3/00** (2006.01)   **G02B 30/27** (2020.01)

(52) Classification Coopérative des Brevets (CPC):
**B60R 19/52; G02B 3/005; G02B 30/27;**
B60R 13/04; B60R 2019/525

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **28.04.2022 FR 2204037**

(71) Demandeur: **Compagnie Plastic Omnium SE**
**69007 Lyon (FR)**

(72) Inventeurs:
• **KHAYAT, Issam**
**01150 SAINTE-JULIE (FR)**
• **PIERROT, Frédéric**
**01150 SAINTE-JULIE (FR)**

(74) Mandataire: **LLR**
**11, boulevard de Sébastopol**
**75001 Paris (FR)**

(54) **TEXTURE 3D OPTIQUE FLOTTANTE MODULAIRE**

(57)     L'invention concerne une pièce de carrosserie de véhicule automobile comprenant une paroi lenticulaire (1) en matière plastique moulée transparente comprenant une face externe (10) et une face interne (11) opposées entre elles, la face externe (11) formant un réseau de microlentilles (100) sensiblement sphériques d'un rayon de courbure donné, disposées selon un premier pas donné (p1, p'1), la face interne supportant un réseau de motifs tridimensionnels (110) disposés selon un second pas donné (p2, p'2), où la paroi lenticulaire (1) est constituée par un ensemble de pans (15), chaque pan (15) étant indépendant des autres pans (15) et comprenant une partie de la face externe (10) et une partie de la face interne (10) de la paroi lenticulaire (1).

[Fig. 1]

EP 4 269 182 A1

**Description**

L'invention concerne le domaine des véhicules automobiles et plus particulièrement les panneaux formant les éléments de carrosserie.

Il est d'usage courant d'insérer des éléments décoratifs dans les panneaux de carrosserie pour améliorer l'esthétique du véhicule. Ces éléments décoratifs peuvent servir à renforcer les lignes de la carrosserie ou encore supporter un logo ou tout autre signe distinctif de la marque ou du modèle de véhicule.

Pour renforcer cet effet visuel, les éléments décoratifs jouent sur les propriétés optiques des matériaux qui les composent et peuvent comporter des sources de lumière.

Ainsi le document WO2016174917 décrit une feuille dont une première face supporte une pluralité de lentilles cylindriques et dont la seconde face, opposée à la première face, est une surface plane sur laquelle sont imprimées une première image et une seconde image. Les images sont disposées de manière à créer un effet stéréoscopique dans le plan de la feuille, de sorte qu'un observateur extérieur situé du côté de la première face voit apparaître une image reconstituée en trois dimensions.

De manière similaire, le document JP 2010256807 propose une plaque sur laquelle une première face supporte une partie d'un motif principal pixélisé en creux. L'autre partie complémentaire du motif principal est formée par des structures en relief disposées sur la surface arrière de la plaque de manière à produire un motif de moiré dans le plan de la feuille pour un observateur placé du côté de la première face.

Le document FR3087015 propose quant à lui une pièce de carrosserie comprenant une paroi lenticulaire en matière plastique moulée transparente comportant une face externe, formant un réseau de microlentilles sensiblement sphériques disposées selon un pas donné, et une face interne opposée à la face externe et supportant un réseau de motifs en relief identiques disposés selon un pas donné.

Néanmoins cette solution présente quelques inconvénients. Tout d'abord, l'utilisation d'une paroi lenticulaire formant un élément optique monobloc sur toute la surface d'un panneau de carrosserie de grandes dimensions peut poser des problèmes d'ordre logistique. De plus, de telles parois manquent d'adaptabilité au style d'un véhicule. Il est en effet difficile de réaliser une grande pièce avec des formes évolutives en 3D très marquées pour épouser le style du véhicule tout en étant capable d'intégrer par moulage sur ses deux faces de la paroi lenticulaire des « micro » formes. Enfin, ces parois lenticulaires sont difficilement réutilisables sur d'autres véhicules que celui pour lequel une paroi a été conçue, du fait des formes de style différentes.

L'invention a notamment pour but de remédier à ces inconvénients en proposant une solution adaptable à toute surface de la carrosserie et à tout style d'un véhicule, une logistique simplifiée.

A cet effet l'invention a pour objet une pièce de carrosserie de véhicule automobile comprenant une paroi lenticulaire en matière plastique moulée transparente comprenant une face externe et une face interne opposées entre elles, la face externe formant un réseau de microlentilles sensiblement sphériques d'un rayon de courbure donné, disposées selon un premier pas donné, la face interne supportant un réseau de motifs tridimensionnels disposés selon un second pas donné, la paroi lenticulaire étant constituée par un ensemble de pans, chaque pan étant indépendant des autres pans et comprenant une partie de la face externe et une partie de la face interne de la paroi lenticulaire.

Les inventeurs ont découvert de manière inattendue que la discrétisation d'une paroi lenticulaire en un ensemble de pans permettait d'obtenir le même résultat visuel et ainsi d'obtenir une image, notamment holographique. L'invention présente l'avantage, grâce à l'ensemble de pans, de pouvoir être facilement adaptable à toute forme de la carrosserie et à tout style d'un véhicule. En effet, chaque pan pouvant être disposé de manière indépendante des autres pans, il est possible d'obtenir des parois lenticulaires de formes très complexes qui seraient très difficilement réalisables, voire impossible, en une seule pièce. En outre, les dispositions possibles des pans entre eux assurent une simplicité du suivi de la forme de du style du véhicule. Par ailleurs, le transport et la logistique de la paroi lenticulaire sont avantageusement simplifiés car cette dernière présente une surface au sol plus faible et est moins fragile dans la mesure où les pans de par leur dimension réduite sont plus résistants aux chocs. Les pans peuvent ainsi être empilés les uns sur les autres pour leur transport. La paroi lenticulaire selon l'invention s'inscrit également dans une logique de plus grande réparabilité, essentielle dans le monde actuel, dans la mesure où un dommage ou un défaut de conception à un ou plusieurs endroits de la paroi ne nécessite que le replacement du ou des pans endommagés et non plus de la paroi en entier. Enfin, l'ensemble de pans permet avantageusement d'obtenir une meilleure déformation de la paroi lenticulaire et de diminuer les dommages corporels d'un individu dans le cas d'un choc piéton. En effet, chaque pan peut être déplacé par rapport aux autres, permettant une meilleure absorption de l'énergie du choc et un plus faible renvoi d'énergie au piéton.

En choisissant judicieusement le rayon et le pas des microlentilles, le pas et la taille des motifs en relief, l'épaisseur des pans en fonction de l'indice de réfraction du matériau transparent on peut jouer sur la distance à laquelle la ou les images sont projetées depuis les pans par rapport à la pièce de carrosserie ainsi que sur la taille et la résolution de l'image visible par un observateur situé du côté de la face extérieure de la pièce de carrosserie.

Par « pan indépendant » on entend dans l'invention que chaque pan a ses propres bords.

Chaque pan forme une partie de la face interne et de la face externe de la paroi lenticulaire. L'ensemble des pans formant la totalité de la face externe et de la face interne de la paroi lenticulaire. La face externe est considérée comme la face tournée vers l'extérieur du véhicule, destinée à être visible par un observateur situé à l'extérieur du véhicule. La face interne est quant à elle considérée comme la face tournée vers l'intérieur du véhicule. Bien entendu, la face externe et la face interne de chaque pan sont parallèles entre elles et de même forme.

Chaque pan est assimilable à une plaque présentant deux faces principales opposées et et des bords. Par « plaque », il est entendu un élément ayant deux grandes dimensions, ici les dimensions des faces interne et externe du pan, et une petite, ici les bords du pan. Les termes « bord », « tranche » et « face latérale » seront pris pour synonyme. Ainsi, chaque pan comprend plusieurs faces latérales, et notamment quatre faces latérales à savoir une face supérieure, une face inférieure et deux faces de côtés. Dans l'invention, un ou plusieurs des bords d'un pan forme une partie ou la totalité d'un bord de la paroi lenticulaire.

Chaque pan peut présenter son propre réseau de microlentille et/ou son propre réseau de motif tridimentionnel. Plusieurs pans, voire l'ensemble des pans, peuvent présenter le même réseau de microlentille et/ou le même réseau de motif tridimensionnel. L'ensemble de ces réseaux forment ceux de la paroi lenticulaire. Ainsi, les motifs et leur projection peuvent évoluer au sein de la paroi lenticulaire.

Chaque pan de la paroi lenticulaire est réalisé en matière plastique transparente d'indice de réfraction n. Un élément est dit transparent quand il permet de distinguer les objets nettement à travers son épaisseur. On peut considérer qu'un élément est transparent lorsqu'il présente une transmission lumineuse comprise entre 80% et 99%.

À titre d'exemple, des matériaux plastique présentant une bonne transparence et pouvant convenir à cet usage sont : le polypropylène, le polyéthylène téréphtalate, le polymétacrilate de méthyle, le polycarbonate, le polytéréphtalate d'éthylène, l'acrylonitrile styrène acrylate, l'acrylonitrile butadiène styrène, ou encore les polyoléfines amorphes tels que les cyclo-oléfines copolymères (COC) ou les cyclo-oléfines-polymères (COP). Chacun de ces matériaux possède bien évidemment un indice de réfraction connu qui lui est propre. Concernant chacun de ces matériaux, et plus particulièrement le polypropylène, l'homme du métier sait en déterminer les membres correspondant aux matériaux transparents tels que définis plus haut.

Selon un mode de réalisation particulier de l'invention, au moins deux pans successifs présentent un bord en regard l'un de l'autre de forme complémentaire.

Cet aspect de l'invention permet d'obtenir une jonction nette, quasi invisible, entre les deux pans successifs, de sorte qu'ils paraissent n'en forme qu'un.

Pour la suite de la description les termes « adjacent » et « successif » seront pris pour synonymes.

Notamment, la tranche respective en regard de deux pans successifs a des coins droits avec la face externe et la face interne. Alternativement, la tranche en regard de deux pans successifs a une forme biseautée complémentaire de l'autre.

En particulier, la tranche respective en regard de deux pans successifs est lisse, grainée ou dépolie. De préférence, ladite tranche est grainée ou dépolie, afin d'obtenir une lumière diffuse au sein du pan sans point chaud.

Selon un mode de réalisation de l'invention, la face interne d'au moins un des pans est superposée au moins partiellement à la face externe d'un pan adjacent. Une telle disposition par tuilage, en cascade, d'au moins deux pans permet de constituer une paroi lenticulaire quasi continue adaptée le long d'un style de forme galbée à l'aide de pans indépendants successifs plan ou faiblement galbé, sans avoir besoin d'utiliser des pans très galbés. Cet aspect de l'invention permet un gain économique et logistique des pans de la paroi lenticulaire. En outre, deux pans partiellement superposés peuvent comprendre des motifs tridimensionnels qui se complètent, permettant de complexifier l'aspect visuel obtenu.

Selon un mode de réalisation de l'invention, au moins deux pans adjacents sont espacés l'un de l'autre.

Selon un mode de réalisation de l'invention, au moins un pan présente une forme au moins partiellement galbée. Ledit pan peut comprendre plusieurs parties galbées, notamment une alternance de parties convexes et de parties concaves.

Selon un autre mode de réalisation de l'invention, au moins un pan présente une forme plane.

La combinaison de pans avec une ou plusieurs parties galbées et de pans de forme plane permet d'adapter la forme générale de la paroi lenticulaire au style d'un véhicule.

Selon un mode de réalisation de l'invention au moins deux pans sont identiques. Cet aspect de l'invention permet de réaliser des parois lenticulaires de dimensions et formes différentes à l'aide d'une unité unique. Chaque pan forme ainsi un élément standard. Il est ainsi obtenu un gain économique de fabrication et logistique des parois lenticulaires.

Selon un mode de réalisation de l'invention, au moins deux pans successifs présentent une orientation différente.

Selon un mode de réalisation de l'invention, la pièce de carrosserie comprend une ou plusieurs sources de lumière, chaque pan est éclairé par ladite au moins une source de lumière émettant une lumière au travers d'au moins un de leurs bords respectifs.

Différents modes d'éclairage peuvent être employés, tels qu'un rétroéclairage de la face interne des pans, et/ou un éclairage latéral par un ou plusieurs bords de chaque pan. Notamment chaque pan peut être éclairé par une source de lumière dédiée, ou bien une partie, voire l'ensemble, des pans peut être éclairée par une même source de lumière. L'indépendance des pans permet d'obtenir plus facilement des éclairages particuliers de certaines régions de la paroi lenticulaire, dans la mesure où la diffusion des rayons lumineux d'un pan à un autre est impactée par leur bord

Différents types de sources de lumière peuvent être utilisés. Ainsi, ladite source de lumière peut correspondre à une pluralité de diodes électroluminescentes ou encore à un guide de lumière diffusant relié à une source de lumière excentrée.

Par guide optique ou guide de lumière, on entend ici une pièce transparente ou translucide, à l'intérieur de laquelle des rayons lumineux se déplacent suivant une direction générale commune depuis une première extrémité du guide comportant une surface d'entrée à proximité de laquelle sont disposées une ou plusieurs sources de lumière, jusqu'à une surface de sortie d'où les rayons lumineux émergent. La propagation de la lumière à l'intérieur du guide de lumière se fait par réflexions internes successives des rayons lumineux sur les faces de réflexion internes du guide de lumière.

On entend par « translucide » un élément qui se laisse traverser par la lumière dans le domaine du visible, mais sans permettre de distinguer nettement les objets. Un élément translucide est un élément au travers duquel la lumière est diffuse. On peut considère qu'un élément ayant une transmission lumineuse supérieure ou égale à 50% environ et inférieure à 80 % est translucide.

On entend par guide de lumière diffusant, un guide de lumière dans lequel la surface de sortie de la lumière est formée par une face latérale dudit guide de lumière. Pour un guide de lumière diffusant de section droite circulaire, tel qu'une fibre optique, la lumière émerge du guide de lumière selon une direction sensiblement radiale. Un guide de lumière diffusant permet donc de distribuer un flux lumineux sensiblement constant en tout point de la surface de sortie de la partie diffusante du guide.

La surface de la fibre, ou du guide de lumière, considérée comme la surface de sortie peut être traitée de manière à la rendre rugueuse. Les rugosités sont alors autant de surfaces réfléchissantes permettant à une partie de la lumière de s'échapper du guide de lumière vers l'extérieur.

Selon un mode de réalisation de l'invention, au moins deux pans adjacents de la paroi lenticulaire sont espacés l'un de l'autre et définissent un espacement entre deux de leurs bords situés en regard dudit espacement, et où un montant est disposé dans ledit espacement ou en regard dudit espacement. Notamment ledit montant est de préférence opaque pour masquer au moins partiellement ledit espacement.

Par « opaque » il est entendu un élément ayant une transmission lumineuse inférieure à 50%.

Lorsque ledit montant est disposé dans ledit espacement, il peut être au contact mais est de préférence espacé des deux pans. Dans ce mode de réalisation, ledit montant peut notamment comprendre une ou plusieurs sources lumineuses afin d'éclairer au moins un des deux pans, en particulier par sa tranche.

Lorsque ledit montant est disposé en regard dudit espacement, il présente de préférence des dimensions égales ou supérieures à celles dudit espacement, de manière à le masquer. Ainsi, le montant peut être disposé *stricto sensu* dans l'espacement ou bien s'étendre devant et/ou derrière au moins un des deux pans adjacents de sorte à recouvrir la face externe et/ou la face interne d'au moins un des deux pans adjacents. Dans cet aspect, ledit montant est notamment disposé de préférence devant des deux pans selon la direction longitudinale du véhicule.

Selon un mode de réalisation, la pièce de carrosserie comprend un support sur lequel sont montés les pans de la paroi lenticulaire. Ledit support permet de disposer les pans de la paroi lenticulaire les uns par rapport aux autres. À cet effet, les pans peuvent être fixés au support par tout moyen, notamment par emboitement, collage ou encore par clipsage. Le support peut également être surmoulé sur les pans.

Le support peut comprendre des logements de forme complémentaire à chaque pan, afin de loger un ou plusieurs de leurs bords. Ce support peut notamment comprendre le ou chaque montant disposé au niveau de deux pans adjacents espacés.

La pièce de carrosserie peut également comprendre un boîtier sur lequel est monté la paroi lenticulaire.

En outre, la pièce de carrosserie peut notamment comprendre une paroi de protection disposée devant la paroi lenticulaire et destinée à protéger cette dernière de toute exposition extérieure. Cette paroi de protection comprend au moins une zone transparente de manière que la paroi lenticulaire puisse être aperçue à travers. La paroi de protection peut être entièrement transparente. La paroi de protection est notamment réalisée dans un matériau choisi parmi ceux cités pour les pans de la paroi lenticulaire.

La paroi de protection est notamment espacée de la paroi lenticulaire, de sorte à définir une chambre entre la paroi lenticulaire et la paroi de protection. Notamment la paroi de protection recouvre tout ou partie de la paroi lenticulaire. Notamment encore, la paroi de protection est montée sur le boîtier.

La paroi de protection peut comprendre un ou plusieurs caches opaques configurés pour définir une ou plusieurs zones opaques de la paroi de protection au travers desquelles la paroi lenticulaire ne peut être perçue. Le ou les caches peuvent notamment être disposés contre ou en regard de la face interne de la paroi de protection, tournée vers la paroi lenticulaire, et/ou contre la face externe de la paroi de protection, tournée vers l'extérieur du véhicule. Le ou les caches peuvent notamment être un film, une couche de peinture ou une structure.

Suivent d'autres caractéristiques optionnelles de la pièce de carrosserie, pouvant être prises seules ou en combinaison :

- la paroi lenticulaire comprend au moins un groupe de pans, en particulier adjacents. Notamment la paroi lenticulaire comprend au moins deux groupes de pans. Par « groupe de pans », il peut être entendu des pans ayant au moins une caractéristique choisie dans le groupe constitué par : au moins un bord disposé en regard d'un autre pan du groupe, une forme commune, au moins une dimension commune, un réseau de microlentilles commun et un réseau de motifs tridimensionnels commun ;

- la paroi lenticulaire comprend plusieurs rangées de pans superposées entre elles. Notamment, les pans de chaque rangée appartiennent au même groupe. Alternativement, les pans appartiennent à différents groupes répartis au sein de chaque rangée. Notamment encore, les pans sont disposés selon un quadrillage. Particulièrement, les pans de chaque rangées et/ou entre les rangées sont alignés ou décalés.

- les pans de la paroi lenticulaire ont une forme arquée ou annulaire et sont disposés selon une ou plusieurs courbes, notamment selon des cercles concentriques ou de manière juxtaposée.

- au moins deux pans présentent le même réseau de motifs tridimensionnels, notamment l'ensemble des pans présente le réseau de motifs tridimensionnels,

- au moins deux pans adjacents présentent un réseau de motifs tridimensionnels et un réseau de microlentilles continus d'un pan à l'autre, c'est-à-dire qui se poursuit entre deux pans adjacents, de sorte à faire apparaître une image continue entre les deux pans.

**Brève description des figures**

L'invention sera mieux comprise à la lecture de la description qui va suivre donnée uniquement à titre d'exemple et faite en se référant aux dessins annexés dans lesquels :

[Fig. 1] illustre une paroi lenticulaire d'une pièce de carrosserie selon l'invention comprenant trois pans.

[Fig. 2] est une vue en section de la paroi lenticulaire selon la figure 1 selon le plan de coupe I-I.

[Fig. 3] représente un ensemble de vues de face de plusieurs configurations (A à E) d'une paroi lenticulaire d'une pièce de carrosserie selon l'invention comprenant une rangée de pans (configuration A, B et E) ou deux rangées (configurations C et D) de pans.

[Fig. 4] représente deux vues de profils (A et B) de deux configurations de pans d'une paroi lenticulaire d'une pièce de carrosserie selon l'invention.

[Fig. 5] est une vue en section d'une pièce de carrosserie selon l'invention dont la paroi lenticulaire suit le galbe d'un véhicule, selon une première configuration.

[Fig. 6] est une vue en section d'une paroi lenticulaire d'une pièce de carrosserie selon l'invention dont la paroi lenticulaire suit le galbe d'un véhicule, selon une deuxième configuration.

[Fig. 7] est une vue en section d'une sixième configuration d'une paroi lenticulaire d'une pièce de carrosserie selon l'invention dont la paroi lenticulaire suit le galbe d'un véhicule, selon une troisième configuration.

[Fig. 8] est une vue en section d'une pièce de carrosserie selon l'invention dont la paroi lenticulaire suit le galbe d'un véhicule, selon une quatrième configuration.

[Fig. 9] représente un ensemble de vues en section de plusieurs configurations (A à E) d'une paroi lenticulaire d'une pièce de carrosserie selon l'invention comprenant un montant.

[Fig. 10] est une vue de profil d'une face avant d'un véhicule dans laquelle est intégrée une pièce de carrosserie selon l'invention.

[Fig. 11] est une vue éclatée de la pièce de carrosserie selon la figure 10.

[Fig. 12] est une vue en section selon le plan de coupe A-A de la figure 10.

[Fig. 13] illustre une vue de la face externe d'un pan de la paroi lenticulaire selon la figure 1.

[Fig. 14] illustre une vue de la face interne du pan.

[Fig. 15] illustre une vue du pan en transparence.

[Fig. 16] illustre une première configuration de disposition des microlentilles sur la face externe du pan.

[Fig. 17] illustre une deuxième configuration de disposition des microlentilles sur la face externe du pan.

[Fig. 18] illustre une vue en perspective de l'image holographique disposée entre le pan et un observateur extérieur.

[Fig. 19] représente une vue schématique du pan et des grandeurs associées.

[Fig. 20] illustre le cheminement des rayons lumineux.

[Fig. 21] illustre le positionnement de l'image en fonction des pas relatifs des lentilles et des motifs.

[Fig. 22] illustre le positionnement de l'image en fonction des pas relatifs des lentilles et des motifs.

[Fig. 23] illustre le mode de sélection des fractions de motifs.

[Fig. 24] illustre un réseau de fractions de motifs.

[Fig. 25] est une représentation en coupe d'une première forme de réalisation du pan.

[Fig. 26] est une représentation en coupe d'une deuxième forme de réalisation du pan.

[Fig. 27] est une représentation en coupe d'une troisième forme de réalisation du pan.

[Fig. 28] est une représentation en coupe d'une quatrième forme de réalisation du pan.

[Fig. 29] illustre un détail du dispositif d'éclairage disposé le long d'une face latérale du pan.

**Description détaillée**

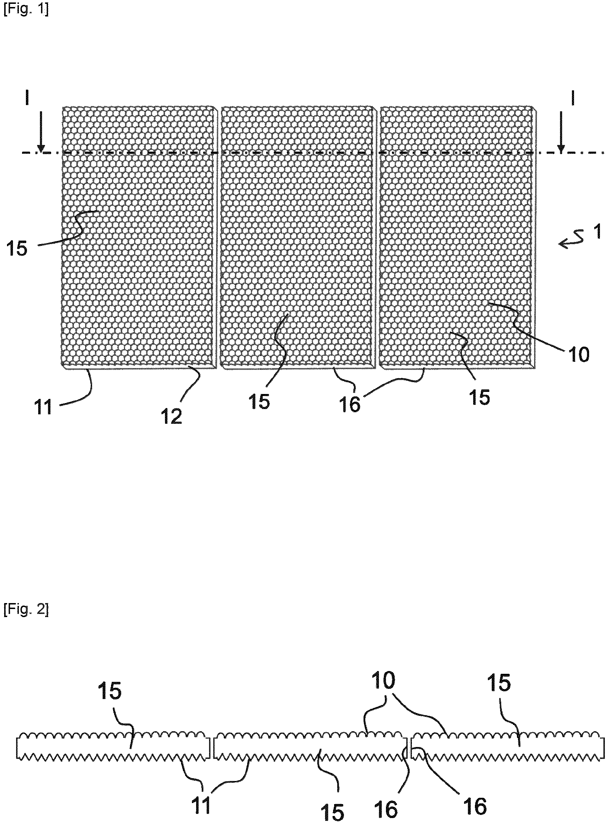

L'invention concerne une pièce de carrosserie pour véhicule automobile comprenant une paroi lenticulaire 1. Comme représenté à la figure 1, la paroi lenticulaire 1 est constituée par une pluralité de pans 15. Chaque pan 15 forme ainsi une partie de la face interne 11 et de la face externe 10 de la paroi lenticulaire 1. L'ensemble des pans 15 formant la totalité de la face externe 10 et de la face interne 11 de la paroi lenticulaire 1. La face externe 10 est considérée comme la face tournée vers l'extérieur du véhicule, destinée à être visible par un observateur situé à l'extérieur du véhicule. La face interne 11 est quant à elle considérée comme la face tournée vers l'intérieur du véhicule.

Chaque pan 15 est assimilable à une plaque présentant deux faces principales opposées 10 et 11 et des bords 16. Ainsi, un ou plusieurs des bords 16 d'un pan 15 forme une partie ou la totalité d'un bord 12 de la paroi lenticulaire 1.

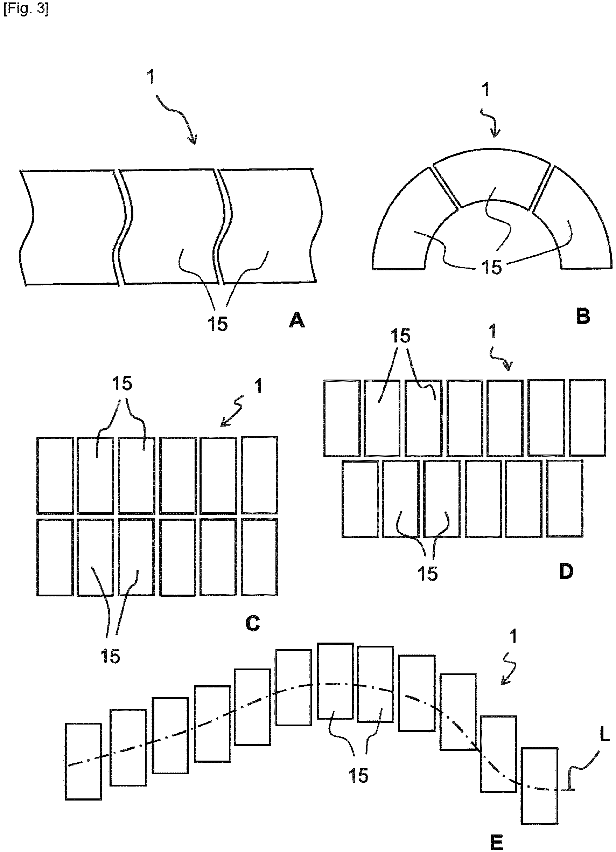

Chaque pan 15 peut prendre n'importe quelle forme. Comme représenté sur les figures 1, 3 et 4, les pans 15 peuvent avoir une forme rectangulaire. Les pans 15 peuvent également avoir une forme triangulaire, à bords courbés (figure 3A), arquée (figure 3B) ou annulaire. Ainsi, les différentes faces latérales 16 de chaque pan ne sont pas forcément droites, elles peuvent être courbes (figure 3A) ou encore en dent de scie.

Notamment, au moins deux des pans 15 peuvent avoir la même forme et en outre les mêmes dimensions de sorte à être identiques. Lorsqu'ils sont identiques, les pans correspondent à une unité unique, à un élément standard. En particulier, tous les pans 15 peuvent présenter la même forme comme dans les configurations représentées aux figures 1 et 3.

Deux pans 15 adjacents peuvent présenter chacun un bord 16 en regard l'un de l'autre de forme complémentaire. Comme visible sur la figure 2 en combinaison avec la figure 1, cet aspect de l'invention permet d'obtenir une jonction nette entre deux pans 15 accolés. Ainsi, lorsqu'un observateur externe au véhicule regarde la paroi lenticulaire 1, il ne distingue pas les bords 16 de forme complémentaire des pans 15 accolés de sorte que la paroi lenticulaire 1 lui apparaît continue comme formée d'une seule pièce. Dans l'exemple représenté sur la figure 2, le bord 16 de forme complémentaire peut être droit, auquel cas il s'agit d'un bord de forme commune, mais il peut également voir une forme biseautée.

L'indépendance des pans 15 permet d'obtenir une liberté de disposition de ses derniers les uns par rapport aux autres afin d'obtenir la forme générale de la paroi lenticulaire 1 souhaitée. A ce titre, on se tournera vers les figures 3, et 5 à 8, qui représente différents exemples combinables de configurations d'une paroi lenticulaire 1.

Sur la figure 3A, trois pans juxtaposés ont des bords ondulés.

Sur la figure 3B, trois pans juxtaposés ont une même forme arquée. Ils sont disposés de manière à former un demi-cercle selon un même cercle de sorte à tourner autour d'un point central.

Sur les figures 3C et 3C sont représentées deux configurations d'une double rangée de pans superposés. Sur la figure 3C, les pans sont disposés selon un quadrillage, alors que sur la figure 3D, les pans de chaque rangée sont décalés.

Sur la figure 3E, les pans sont agencés selon une ligne directrice courbe L.

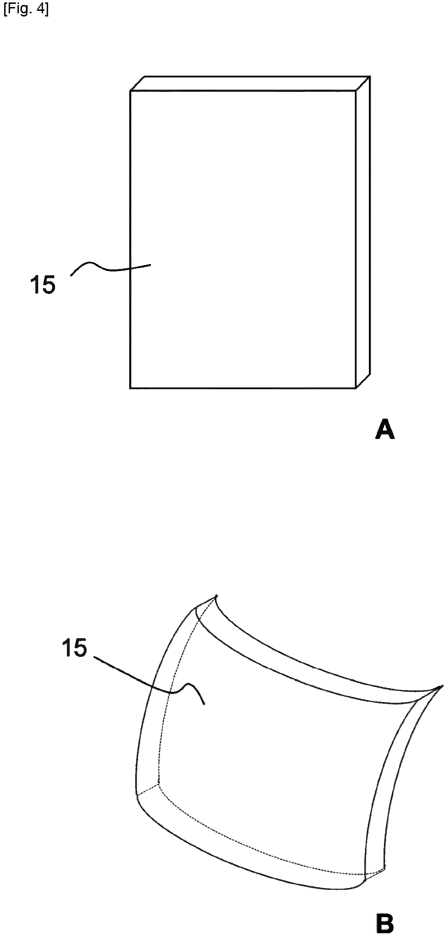

Sur la figure 4 sont représentés deux pans 15 en vue de profil, laissant apparaître leur forme tridimensionnelle. Sur la figure 4A, on distingue que les faces internes et externes du pan 15 ont une forme plane. Sur la figure 4B, on distingue que les faces internes et externes du pan 15 ont une forme galbée.

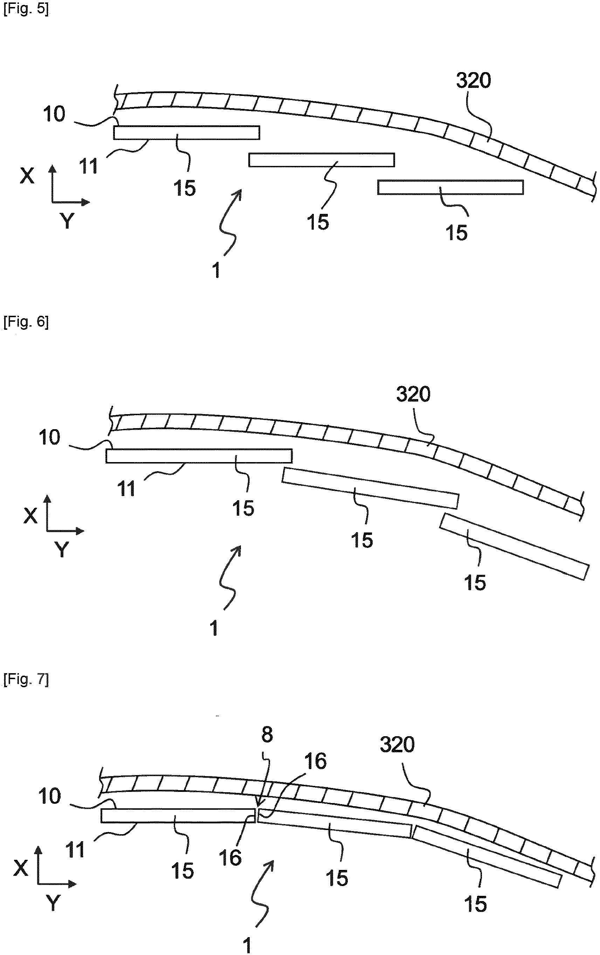

Les figures 5 à 8 illustrent en section différentes configurations d'une pièce de carrosserie 300 comprenant une paroi lenticulaire 1 et une paroi de protection transparente 320 galbée, cette dernière étant notamment adaptée au style d'un véhicule. La paroi lenticulaire 1 est disposée derrière la paroi de protection 320 et présente dans les illustrations représentées différentes dispositions et/ou formes des pans 15 permettant de suivre le galbe de la paroi de protection 320. Dans les trois premiers exemples, les pans 15 présentent une même forme, alors que dans le dernier exemple, deux formes de pans 15 sont utilisées. La paroi de protection 320 est transparente afin que la paroi lenticulaire 1 puisse être aperçue depuis l'extérieur du véhicule. Ainsi, la face externe 10 de chaque pan 15 est disposée en regard de la paroi de protection 320.

La figure 5 illustre un exemple dans lequel plusieurs pans 15 sont disposés en escalier selon les directions X et Y du véhicule. Ici, les pans 15 sont parallèles entre eux selon les directions transversale Y et verticale Z du véhicule mais disposés de manière décalée selon la direction longitudinale X du véhicule. Dans l'exemple représenté, la face externe 10 de certains des pans 15 est partiellement superposée à la face interne 11 d'un autre pan 15. Les parties superposées des pans 15 peuvent être en contact, ou bien distantes comme représenté. Alternativement, les pans adjacents 15 peuvent ne pas se superposer selon la direction X tout en étant positionnés en escalier selon les directions X et Y.

La figure 6 illustre un autre exemple dans lequel les pans sont disposés dans des orientations différentes selon les directions X et Y. Dans cet exemple, la face externe 10 des pans 15 est partiellement superposée à la face interne 11 d'un autre pan 15. Les pans 15 peuvent être dispersés, c'est-à-dire non superposés entre eux, à l'image du mode de réalisation précédent.

La figure 7 illustre un autre exemple dans lequel deux pans 15 se suivent selon la direction Y et sont disposés dans des orientations différentes selon les directions X et Y afin de mieux suivre le galbe de la paroi de protection 320. Dans l'exemple représenté, les bords 16 des pans 15 qui se font face sont droits, de sorte qu'un espacement 8 apparaît entre les ces deux bords 16. Alternativement, ces bords 16 pourraient avoir une forme complémentaire afin de diminuer l'espacement 8, voire qu'aucun espacement 8 ne soit présent entre les deux pans 15 adjacents. À cet effet, un des deux bords pourrait 16 être en biseau.

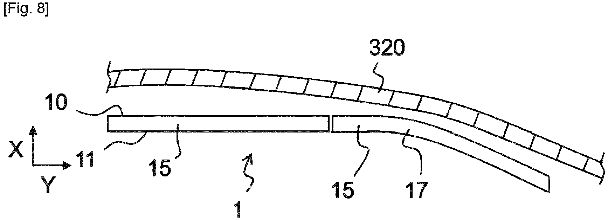

La figure 8 illustre un dernier exemple dans lequel un premier pan 15 de forme plane est suivi par un deuxième pan 15 présentant une partie galbée 17. La partie galbée 17 suit ici la forme du galbe de la paroi de protection 320. La paroi lenticulaire 1 selon cet exemple présente une forme générale plus proche de la forme de la paroi de protection 320.

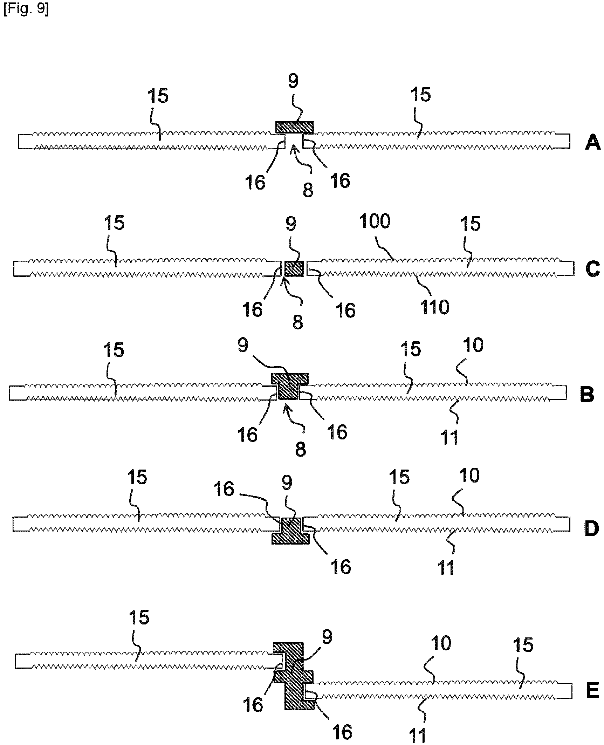

La figure 9 illustre cinq modes de réalisation dans lesquels deux pans 15 adjacents sont espacés l'un de l'autre, de sorte qu'ils définissent un espacement 8 entre deux de leurs bords 16 respectifs situés en regard dudit espacement 8. Cet espacement 8 peut par exemple résulter d'une contrainte du style du véhicule ou bien de la volonté d'obtenir une forme particulière de la paroi lenticulaire 1, créant une séparation volontairement visible entre deux pans. La pièce de carrosserie peut comprendre un montant 9 disposé dans l'espacement 8 ou bien en regard dudit espacement 8, de préférence devant ledit espacement 8, c'est à dire du côté de la face externe 10.

Lorsque le montant 9 est disposé en regard dudit espacement 8 (figure 9A), il peut en particulier présenter des dimensions égales ou supérieures à celles dudit espacement 8 afin de recouvrir ce dernier. L'espacement 8 est ainsi caché à la vue d'un observateur. Dans ce cas, ledit montant 9 peut recouvrir partiellement les deux pans adjacents 15, tel que représenté sur la figure 9A.

Lorsque le montant 9 est disposé dans l'espacement 8 (figures 3B à 3E), il peut notamment être dimensionné pour le combler totalement ou en quasi-totalité et ainsi être au plus proche voire au contact, du bord 16 des deux pans 15 adjacents. Le montant 9 peut notamment comprendre une ou plusieurs sources lumineuses 5 afin d'éclairer au moins un des deux pans 15 par ledit bord 16. Par ailleurs, le montant 9 peut s'étendre devant afin de recouvrir partiellement la face externe 10 desdits pans 15 adjacents (figure 3B) et/ou s'étendre derrière afin de recouvrir partiellement la face externe 10 desdits pans 15 adjacents (figure 3D). Lorsqu'il s'étend devant et derrière, il présente de préférence des glissières en formes de « U » dans lesquelles sont disposés les bords 16 en regarde l'espacement 8 pour le positionnement, voire le maintien, des pans 15 adjacents. A la figure 3E est représenté un autre mode de réalisation dans lequel les pans 15 adjacents ne sont pas en regard, mais décalés, et où un montant 9 est disposé dans l'espacement 8 et enserre leur bord 16 respectif situé en regard dudit espacement 8 à l'aide d'une glissière en « U ».

Comme représenté sur l'ensemble des figures 3A à 3E, l'extrémité portant le bord 16 des pans adjacents en regard de l'espacement 8 peut être dépourvu du réseau de microlentilles 100 et du réseau de motifs tridimensionnels 110.

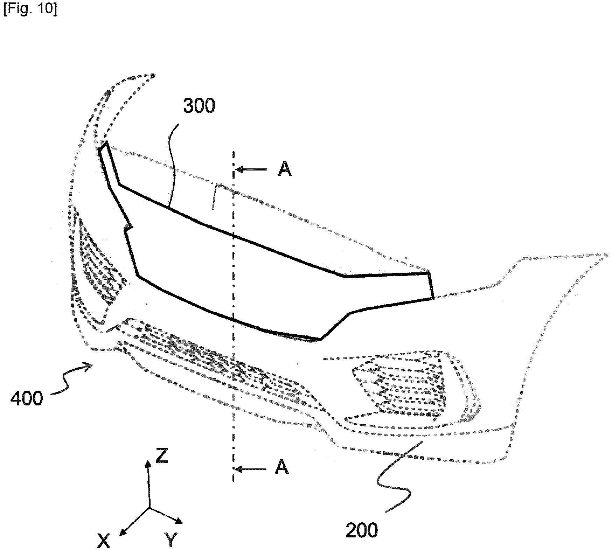

La figure 10 illustre l'intégration d'une pièce de carrosserie 300 selon l'invention dans la face avant 400 avant d'un véhicule. Dans l'exemple représenté sur cette figure, la pièce de carrosserie 300 est disposée au niveau de la calandre du véhicule et sa périphérie épouse en partie une peau de pare-chocs 200.

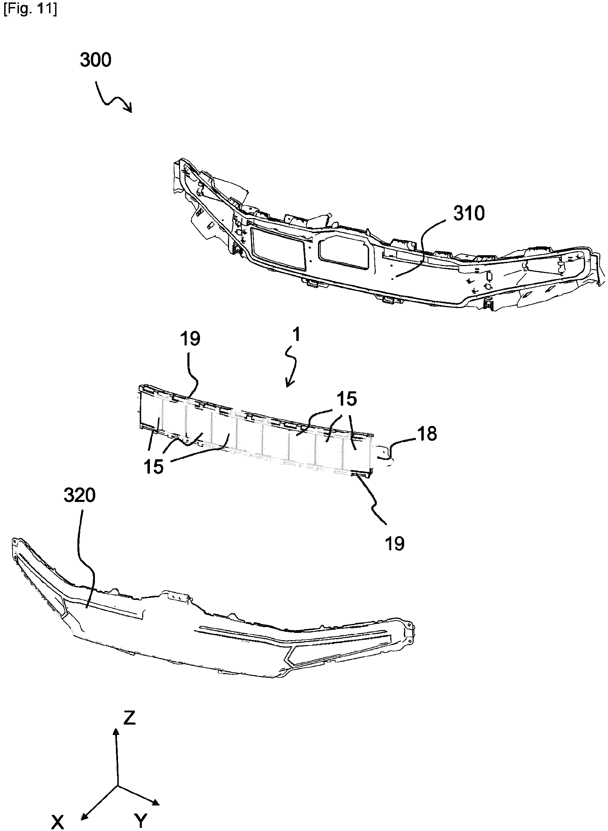

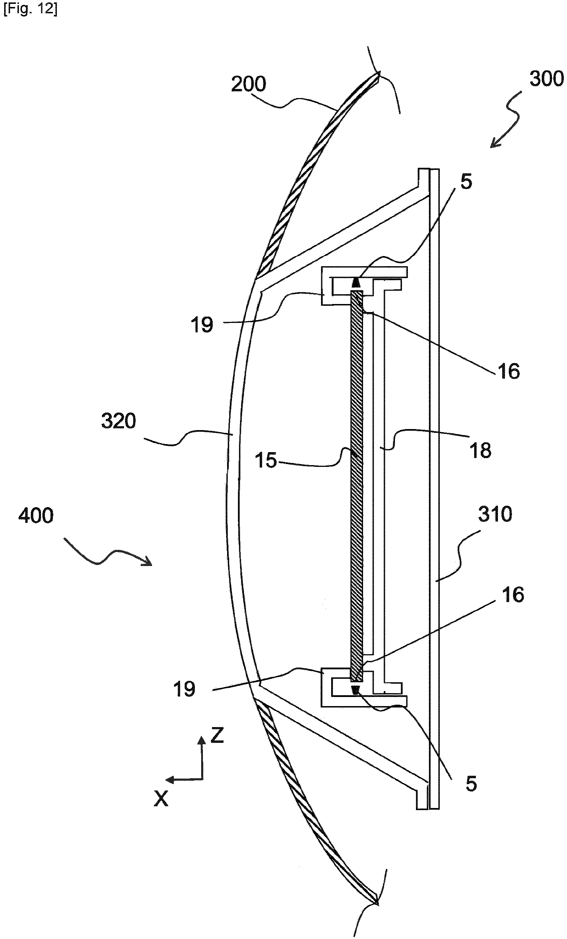

La figure 11 présente une vue éclatée de cette pièce de carrosserie 300 et la figure 12 présente une vue de la face avant 400 selon le plan de coupe A-A. Ces deux figures seront lues ensembles.

La pièce de carrosserie 300 comprend ici une paroi lenticulaire 1, un boîtier 310 sur laquelle la paroi lenticulaire est montée et une paroi de protection 320 disposée en avant de la paroi lenticulaire 1 selon la direction X du véhicule et destinée à protéger la paroi lenticulaire 1 de l'extérieur.

La paroi lenticulaire 1 comprend un ensemble de pans 15 ainsi qu'un support 18. Le support 18 permet de disposer les pans 15 de la paroi lenticulaire 1 les uns par rapport aux autres, ici sur une même rangée. À cet effet, les pans 15 peuvent être fixés au support 18 par tout moyen, notamment par collage ou encore par clipsage. Notamment les pans 15 sont fixés dans des logements 19 disposés au-dessus et au-dessous des pans 15 selon la direction Z. Les logements 19 sont ici rapportées sur le support 18.

Les pans 15 peuvent être éclairés à l'aide d'une ou de plusieurs sources de lumière 5.

Comme représenté sur la figure 12, la ou les sources de lumières 5 peuvent être disposées le long d'un ou de plusieurs des bords 16 de chaque pan 15. Notamment, une source de lumière 5 peut être disposée le long du bord supérieur et/ou du bord inférieur de chaque pan 15 permettant d'éclairer chaque pan 15 par un ou deux de ses bords 16 opposés. Comme illustré sur cette figure, cette ou ces sources de lumières 5 peuvent être logées dans les logements 19, notamment en forme de gorge, recouvrant le bord 16 supérieur et/ou inférieur de chaque pan 16.

Alternativement, cette ou ces sources de lumière 5 peuvent être disposées derrière les pans 15, afin de les rétroéclairer, et notamment entre les pans 15 et le support 18. Notamment la ou les sources lumineuses sont au moins en partie montées sur le support 18.

Le boîtier 310 sur lequel est montée la paroi lenticulaire 1 est donc disposé en arrière de cette dernière selon l'axe longitudinal X du véhicule.

La paroi de protection 320 est transparente de sorte à ce qu'un observateur extérieur puisse apercevoir le ou les motifs projetés par la paroi lenticulaire 1. La paroi de protection 320 peut notamment comprendre un cache opaque (non représenté) configuré pour définir une ou plusieurs zones transparentes au niveau de la paroi de protection au travers desquelles la paroi lenticulaire 1 est visible.

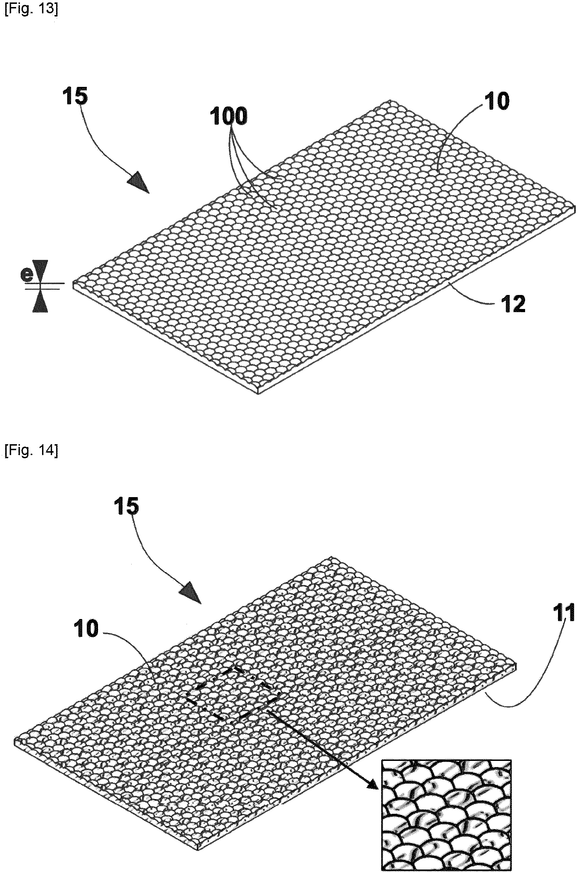

On se tournera à présent vers les figures 13 à 29 décrivant de manière détaillée un pan 15 d'une paroi lenticulaire 1 selon l'invention.

La figure 13 représente une vue schématique en perspective de la face externe 10 d'un pan 15 d'une paroi lenticulaire 1, d'épaisseur e. La face externe 10 supporte un réseau de microlentilles 100. Les microlentilles, toutes identiques, ont une forme sphérique de rayon R. La face latérale 16 du pan 15 est lisse, grainée ou dépolie et ne comporte pas de motifs.

La figure 14 illustre le même pan 15 vu du côté de la face interne 11. Des motifs en relief 110, tous identiques, sont disposés de manière régulière. Ces motifs tridimensionnels peuvent indifféremment être réalisés en creux ou en relief. Dans l'exemple servant de support à la présente description ces motifs ont la forme d'un S stylisé tel qu'illustré dans le médaillon accroché à la figure 14.

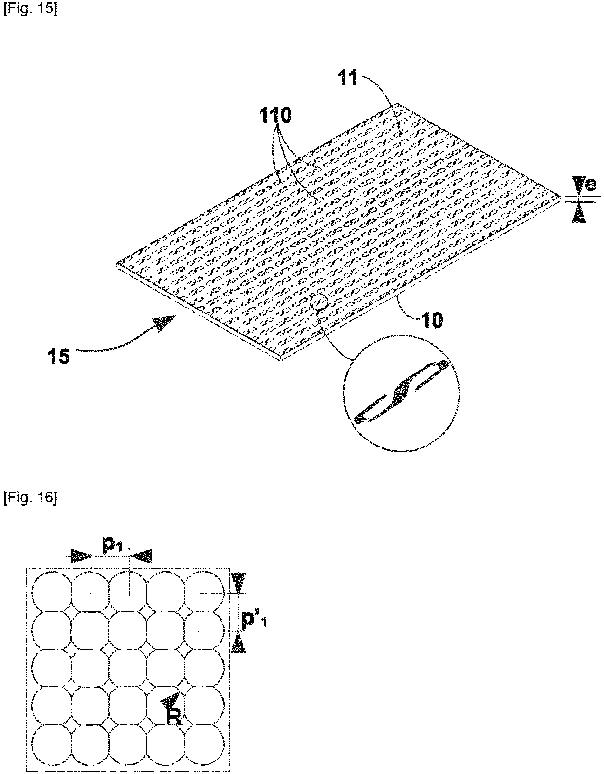

La figure 15 et le médaillon qui lui est attaché permettent d'illustrer le pan 15 en transparence, en faisant apparaitre simultanément le réseau de microlentilles 100 et le réseau de motifs tridimensionnels 110.

On repérera par $p_1$ le pas séparant deux microlentilles 100 juxtaposées dans la direction longitudinale et par $p'_1$ le pas séparant deux microlentilles 100 juxtaposées dans la direction transversale.

La figure 16 illustre le cas dans lequel le pas $p_1$ est égal au pas $p'_1$. Le rayon R des microlentilles est, dans le cas de cet exemple, supérieur au pas $p_1$.

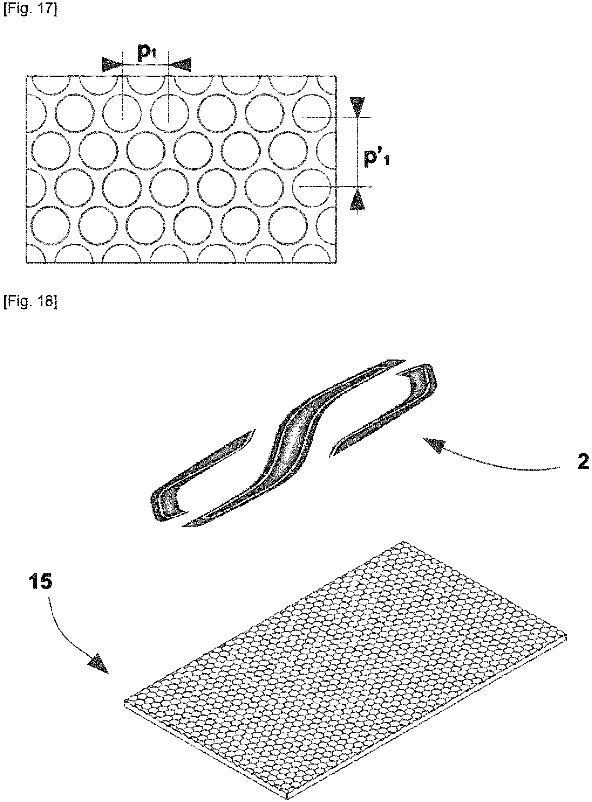

La figure 17 illustre le cas dans lequel le pas $p_1$ est inférieur au pas $p'_1$ et dans lequel le rayon R des microlentilles est inférieur au pas $p_1$.

Ces modes de réalisation du réseau de microlentilles ne sont pas limitatifs et toutes les combinaisons des modes de réalisation illustrés sont également admises.

La taille (le rayon R) et la densité des microlentilles (le pas) permettent de faire varier la résolution de l'image holographique.

La figure 18 illustre la formation de l'image holographique obtenue en éclairant le pan 15 à l'aide d'une lumière naturelle et visible par un observateur externe. Dans le cas de cette exemple, l'image holographique est formée entre le pan 15 et l'œil de l'observateur. On parlera alors d'une image réelle.

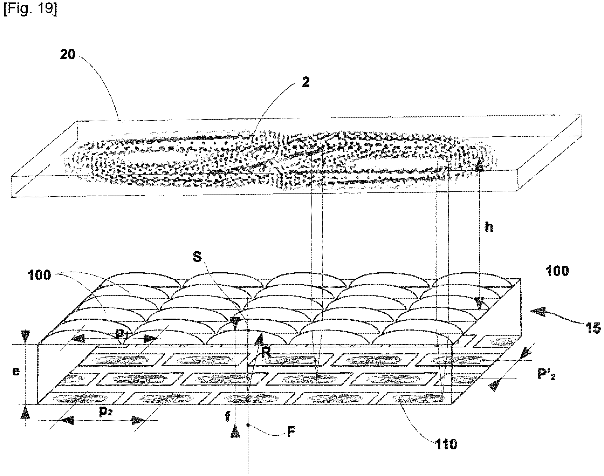

La figure 19 permet de visualiser les principales grandeurs géométriques permettant de configurer le dispositif.

La valeur N représente le nombre de motifs disposés sur la face interne selon une direction donnée (longitudinale ou transversale).

Le pas $p_1$ et le pas $p_2$ représentent respectivement le pas des microlentilles et des motifs selon une même direction (longitudinale). La valeur $\Delta p = p_2 - p_1$ exprime la valeur de la différence entre le pas $p_2$ et le pas $p_1$ et peut être de signe positif ou négatif. La valeur absolue de cette différence s'exprime sous la forme $|\Delta p|$. Le rapport $\frac{\Delta p}{|\Delta p|}$ exprime le signe de cette différence. La valeur e représente l'épaisseur du pan 15.

La valeur $\Gamma$ représente la taille d'une image dans une direction donnée et correspond à la distance entre les deux points les plus distants de l'image dans cette direction. On peut donc avoir une valeur $\Gamma$ selon la direction longitudinale et une valeur $\Gamma$' dans la direction transversale. La valeur de $\Gamma$ est également sensiblement égale à la taille du pan 15 permettant d'imager un motif holographique entier dans cette direction.

R représente le rayon de courbure, C le centre de courbure, S le sommet du dioptre et F le point focal d'une microlentille placé à une distance f du centre de courbure S. L'ensemble des points focaux F de l'ensemble des lentilles est disposé sur le plan focal.

Les points A et A' déterminent respectivement la position d'un point objet d'un motif 3D disposé sur la face interne et la position de ce point dans l'image holographique formée à travers le système.

La hauteur de l'image par rapport à la surface du pan 15 est définie par la valeur h. On notera ici que l'image holographique est également une image en trois dimensions qui s'inscrit dans une boite enveloppante 20.

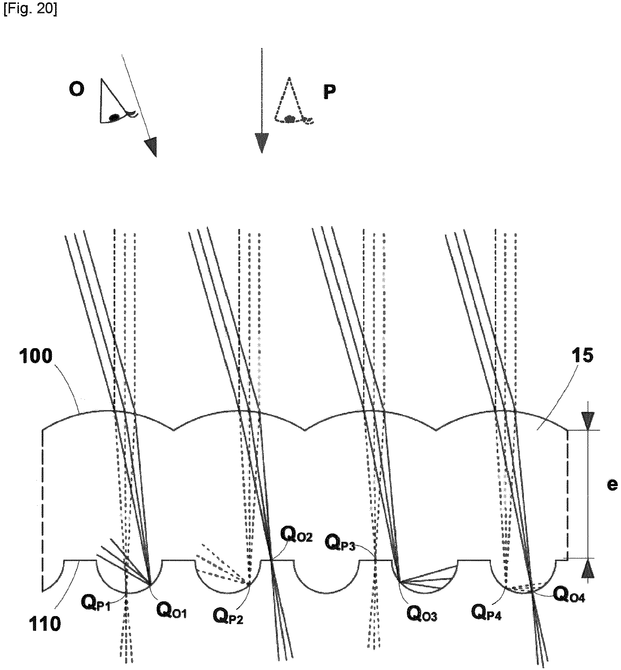

La figure 20 illustre les différents parcours lumineux observables par deux observateurs O et P regardant la paroi lenticulaire selon des angles d'observation différents.

On observera que, selon leur angle d'incidence par rapport au point d'un motif sur lequel ils se projettent, une partie des rayons traversent le pan 15, et seule une partie des rayons est réfléchie. Un premier observateur O, imagé en traits pleins, va pouvoir observer les rayons se réfléchissant sur les motifs de la face inférieure aux points $Q_{O1}$, et $Q_{O3}$. Et un observateur P verra lui les rayons venant des points $Q_{P2}$ et $Q_{P4}$. les rayons passant par les points $Q_{P1}$, $Q_{O2}$, $Q_{P3}$, $Q_{O4}$, traversent le pan 15 et ne sont visibles par aucun des observateurs O ou P.

Cette catégorie de rayon subissant une réflexion totale, en fonction de leur angle d'incidence sur la paroi du motif tridimensionnel, forme l'image holographique sous forme de pixels distribués dans l'espace image et visible par l'observateur.

Le décalage entre le motif et une lentille permet de sélectionner des points différents du motif.

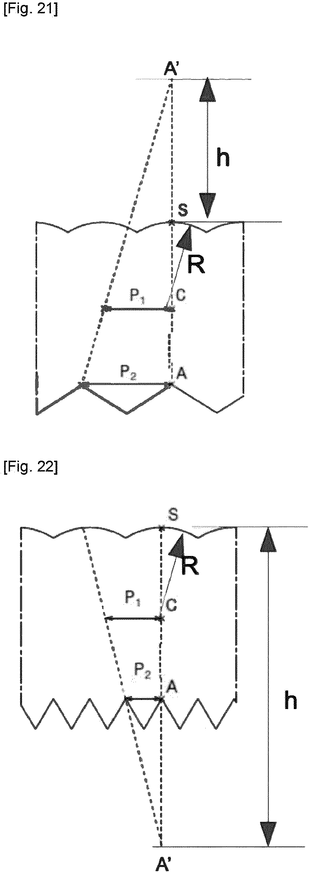

La différence entre le pas $p_1$ et le pas $p_2$, permet de faire varier le positionnement dans l'espace de l'image holographique. Lorsque le pas $p_2$ des motifs est supérieur au pas $p_1$ des microlentilles ($\Delta p > 0$), comme cela est illustré à la figure 21, l'image réelle (ou en relief) se forme au-dessus de la face externe 10, entre l'observateur et la face externe. En revanche, lorsque le pas $p_2$ est inférieur au pas $p_1$ ($\Delta p < 0$), comme cela est illustré à la figure 22, une image virtuelle (en profondeur) se forme en dessous de la face interne 11 du pan 15.

Il est également possible de faire varier la position du plan contenant les points focaux des microlentilles pour obtenir une image virtuelle en profondeur ou une image réelle. Lorsque ce plan focal est situé dans l'épaisseur du pan 15 les positions de l'image réelle et de l'image virtuelle sont inversées par rapport à ce qui est énoncé au paragraphe précédent.

A titre d'exemple, pour un pan de 3 mm d'épaisseur et dont la taille est de 3 cmx3 cm sur la face interne de laquelle les motifs en relief sont distants d'un pas $p_2$ de 1,25 mm, le rayon des microlentilles est de 1,06 mm pour une image holographique réelle (en relief) située à 4,42 cm de la face extérieure 10 du pan 15. Lorsque le rayon des microlentilles est de 1,15 mm l'image holographique virtuelle (en profondeur) se forme à une hauteur de -4,42 cm de la face extérieure 10. Cette différence est due à la position du plan focal qui se situe dans un cas à - 2,88 mm de la face extérieure (à l'intérieur du pan 15) et à -3,12 mm de la face extérieure (à l'extérieur du pan 15) dans l'autre cas.

Toutefois lorsque l'on cherche à obtenir des images plus grandes, cette disposition conduit à réaliser des microlentilles présentant un rayon de courbure R très important, plus difficile à obtenir en fabrication courante.

En faisant appel aux lois de l'optique, il est possible de définir les relations entre les différents paramètres exposés ci-dessus.

Ainsi, on peut faire varier la taille de l'image en changeant la différence de période entre les microlentilles et les motifs en relief de la face interne.

Dans la direction longitudinale, la relation entre le pas $p_1$ des microlentilles et le pas $p_2$ des motifs en relief se présente sous la forme suivante :

$$\frac{1}{p_2} + \frac{\Delta p}{|\Delta p|}\frac{1}{\Gamma} = \frac{1}{p_1} \qquad (1)$$

La même relation (1) s'applique entre les valeurs p'$_1$ et p'$_2$ représentant les pas des microlentilles et des motifs tridimensionnels selon la direction transversale :

$$\frac{1}{p'_2} + \frac{\Delta p'}{|\Delta p'|}\frac{1}{\Gamma} = \frac{1}{p'_1} \qquad (1)'$$

La relation entre la taille $\Gamma$ de l'image et le rayon des microlentilles s'exprime sous la forme :

$$R = \frac{n-1}{n}\frac{e}{(\frac{\Delta p}{|\Delta p|}\frac{p_2}{\Gamma}+1)} \qquad (2)$$

Cette relation (2) permet de déterminer le rayon de courbure R des microlentilles en fonction de la taille $\Gamma$ de l'image désirée, du pas p$_2$, et de l'indice de réfraction n du matériau choisi pour réaliser le pan 15. Ce rayon de courbure R est déterminé de telle sorte que les points formant l'image holographique soient situés à l'intersection deux à deux entre duos motif/microlentille.

Compte tenu de ce qui a été dit précédemment, le rayon de courbure R des microlentilles ne peut pas être trop faible ni trop grand. En effet, si le rayon de courbure est trop grand on obtient un pan 15 comportant une face extérieure ayant un profil proche d'un plan, et si le rayon de courbure est trop petit, on obtient une face extérieure comportant des lentilles de petite taille et très espacées entre elles. On optera donc pour une solution équilibrée dans laquelle le rayon de courbure des microlentilles est sensiblement égal voire légèrement supérieur à la valeur du pas. De même, pour des raisons de faisabilité on se limite à des rayons d'une taille supérieure à 0,5mm.

En pratique, pour des parois lenticulaires 1 adaptées pour être montées sur un véhicule automobile, la valeur du rayon de courbure R des microlentilles des pans 15 varie de 0,5 mm à 3,5 mm, et le pas p$_1$ des microlentilles varie entre 0,5 mm et 3 mm.

Si l'on souhaite déterminer l'épaisseur e du pan 15 en fonction du pas des motifs tridimensionnels p$_2$ de l'indice de réfraction n et du rayon R des microlentilles, on obtient une relation du type :

$$e = \frac{n}{n-1}R(1 + \frac{\Delta p}{|\Delta p|}\frac{p_2}{\Gamma}) \qquad (3)$$

A pas constant, l'épaisseur e de la plaque est sensiblement proportionnelle au rayon de courbure R. Ce qui revient à dire que, lorsqu'on augmente l'épaisseur e, on augmente également la taille des microlentilles pour obtenir une image holographique de qualité. En pratique l'épaisseur e du pan 15 est comprise entre 1,5mm et 5mm et préférentiellement entre 1,5mm et 3,5mm.

La hauteur h s'exprime en fonction de l'indice de réfraction n de l'épaisseur e du pan 15, de la taille souhaitée du motif holographique $\Gamma$ et du pas p$_2$ des microlentilles de la façon suivante :

$$h = \frac{\Delta p}{|\Delta p|}\frac{\Gamma}{p_2}e(1 - \frac{n-1}{n}\frac{1}{\frac{\Delta p}{|\Delta p|}\frac{p_2}{\Gamma}+1}) \qquad (4)$$

ou encore, en se fondant sur les figures 9 ou 10, lorsque l'on souhaite exprimer la hauteur h de l'image holographique en fonction des pas p$_1$ et p$_2$ de l'épaisseur du pan 15 et du rayon R la relation est du type :

$$h = -(\frac{e-R}{p_2})(\frac{1}{p_2} - \frac{1}{p_1})^{-1} \qquad (5)$$

La hauteur h du plan de l'image holographique est alors sensiblement inversement proportionnelle au pas. On remarque toutefois que plus la hauteur h de l'image holographique augmente, plus la taille $\Gamma$ du motif holographique augmente, et plus la qualité de l'image se dégrade en raison d'une grande pixellisation des points formant cette dernière.

On se limitera donc à une image holographique dont la taille Γ est sensiblement égale à la dimension du pan 15.

A titre d'exemple, pour obtenir un hologramme de grande dimension pour un pan 15 en méthacrylate d'indice n égal à 1,586, mesurant 30cmX30cm sur lequel les microlentilles de la face extérieure ont un rayon de 0,8mm et sont disposées à un pas $p_1$ de 0,5 mm, égal au pas $p_2$, l'épaisseur e est égale à 2,16 mm et l'image holographique est disposée à une hauteur de 81cm de la face extérieure 10 du pan 15.

Aussi, de préférence on s'arrangera pour déterminer les paramètres du pan 15 de sorte que la hauteur de l'image par rapport à la face extérieure 10 du pan 15 ne soit pas trop importante, et ne dépasse pas 15cm et soit de préférence inférieure à 10 cm.

Pour obtenir ces valeurs de h faible, on observe alors que le rayon R des lentilles a tendance à diminuer en-deçà des limites de faisabilité.

Une façon de contourner cette difficulté consiste à disposer sur la face interne 11 la seule partie du motif utile sous chacune des microlentilles de manière à agrandir le motif tout en conservant les propriétés optiques que l'on aurait à un pas défini et pour une épaisseur e donnée.

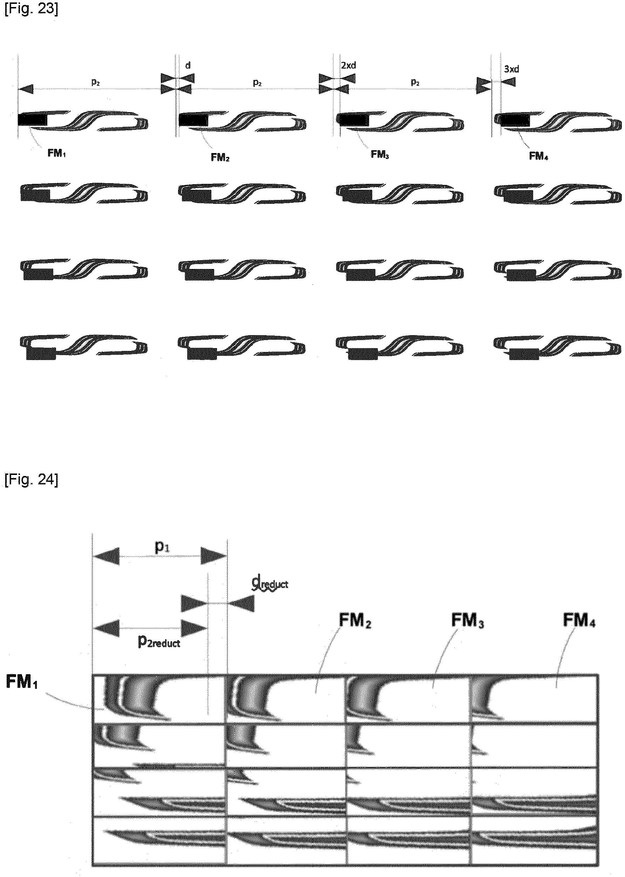

Pour ce faire, en s'appuyant sur la figure 23, on considère, dans une direction donnée (longitudinale ou transversale), un réseau de N motifs entiers de pas $p_2$ et on sélectionne une fraction de motif $FM_1$ d'un motif donné. On sélectionne alors une fraction de motif $FM_2$ de taille égale dans le motif adjacent au précédent motif en décalant la fraction de motif sélectionnée d'une valeur $p_2+d$, où d représente un déphasage donné. On obtient ainsi N fractions de motifs ($FM_1$, $FM_2$, $FM_3$, $FM_4$) représentant des images déphasées les unes par rapport aux autres d'une valeur d. Ces fractions de motifs se recouvrent alors partiellement.

On agrandit chacune de ces fractions de motifs d'un coefficient d'agrandissement K.

On reconstruit alors un réseau de fraction de motifs sur la face interne 11 de la paroi lenticulaire en juxtaposant les fractions de motifs selon un pas p1 correspondant au pas des microlentilles 100 comme cela est illustré à la figure 24.

Le coefficient d'agrandissement K dépend donc directement du pas $p_1$ et de la taille des fractions de motifs choisie.

On en déduit alors un pas réduit $p_{2reduct}$, assimilable à un pas de motifs fictif, correspondant à la valeur du pas $p_1$ diminué de la valeur du décalage multiplié par le coefficient d'agrandissement K ($p_{2reduct} = p_1 - Kd$).

Lorsque la valeur de d est positive on obtient une image holographique en profondeur et lorsque la valeur de d est négative on obtient une image holographique en relief.

L'intérêt de cette méthode est que les formules (1), (2), (3) et (4) s'appliquent de manière identique en remplaçant la valeur de $p_2$ par $p_{2reduct}$.

La valeur de la hauteur h se calcule alors de manière simple à l'aide de la relation :

$$h = -\left(\frac{e-R}{p_{2reduct}}\right)\left(\frac{1}{p_{2reduct}} - \frac{1}{p_1}\right)^{-1} \qquad (5)'$$

Ainsi, à rayon R de microlentilles équivalent, la hauteur h est réduite en proportion du coefficient K. A la différence de la méthode précédente dans laquelle le réseau de motifs est constitué d'une répétition de motifs entiers tous identiques disposés à un pas p2 différent du pas p1, c'est la valeur du déphasage d entre deux motifs successifs qui permet de former l'image holographique en relief ou en profondeur. Si l'angle d'observation augmente il se produit un saut d'image et l'hologramme se décale brusquement.

En revanche, ce type d'arrangement réduit la profondeur et l'effet de relief de l'image holographique.

Bien évidemment, ces dispositions s'appliquent comme précédemment, indistinctement dans la direction longitudinale ou dans la direction transversale.

La portion de motif située au centre de l'image holographique doit être parfaitement alignée avec la microlentille lui correspondant, pour que l'hologramme soit correctement centré.

En choisissant une construction du réseau de motifs entiers, ou de fractions de motifs, adaptée, on peut alors obtenir des valeurs de h se situant entre 2 cm et 15 cm pour une image réelle en relief, ou entre -2 cm et -15 cm pour une image virtuelle en profondeur.

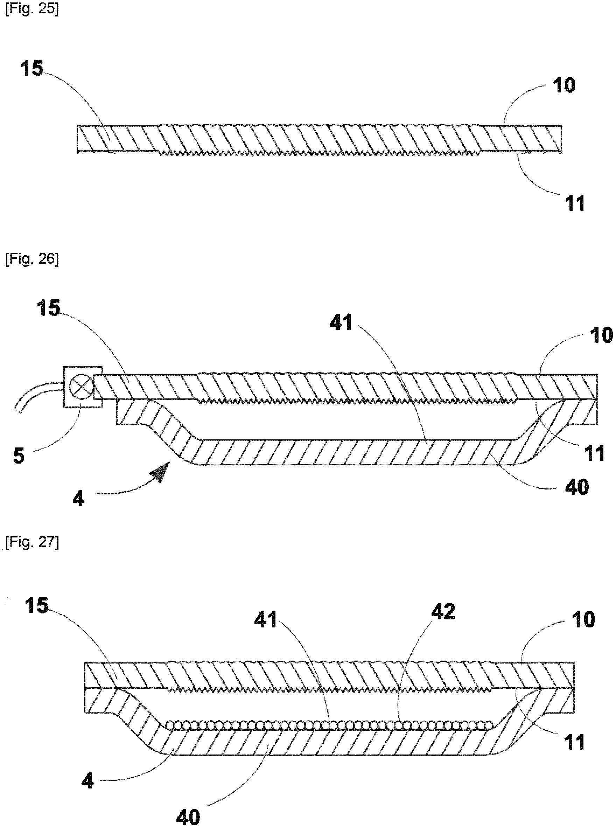

Les figures 25 à 29 illustrent des modes particuliers de pan 15 selon l'invention.

La figure 25 illustre un mode particulier où le pan 15 comprend seulement la paroi transparente. Ce mode de réalisation présente l'avantage que les rayons qui traversent la paroi (voir figure 20) peuvent être réfléchis par des objets se situant à l'arrière du pan 15. En d'autres termes, les pans 15 ne comprennent pas d'élément supplémentaire influant sur la trajectoire des rayons lumineux. Ainsi, lorsque plusieurs pans 15 sont partiellement superposés, il est possible de combiner ou de superposer le motif ou une partie des motifs de ces derniers.

Le mode de réalisation illustré à la figure 26 a pour objet d'empêcher les rayons traversant un pan 15 d'être réfléchi par un objet disposé derrière.

A cet effet, une paroi écran 3 d'indice de réfraction n', inférieur à l'indice de réfraction n de la paroi lenticulaire (n'<n), est surmoulée sur la face interne 11 de la paroi lenticulaire 1. Les motifs en relief disposés sur la face interne 11 de la face inférieure apparaissent en creux dans la face de la paroi écran en contact avec la face interne 11 de la paroi lenticulaire. Ces deux premiers modes de mise en oeuvre de l'invention sont adaptés pour faire apparaitre une image holographique sous l'éclairage d'une lumière extérieure telle que la lumière du jour.

Les modes de réalisation suivants ont pour objet de produire une image holographique dans des conditions de faible luminosité, par exemple en conditions de roulage nocturne.

Un autre mode de mise en oeuvre de l'invention, illustré à la figure 27, prévoit de disposer le pan 15 sur un boîtier optique 4 comprenant une paroi 40 formée d'un matériau ne laissant pas passer la lumière.

La face interne 41 de la paroi 40, opposée à la face interne 11 du pan 15 peut comporter un revêtement renvoyant la lumière ou encore une nappe émettrice de lumière 42 recouvrant la surface située au droit de la face interne 11 du pan 15 supportant le réseau de motifs tridimensionnels 110.

Cette nappe de lumière peut être constituée de fibres optiques ou encore d'un guide d'optique de lumière diffusant raccordé à une source de lumière.

Il est donc envisageable de traiter la surface interne 41 du boîtier 4 de manière à obtenir un caisson optique faisant office de guide de lumière diffusant.

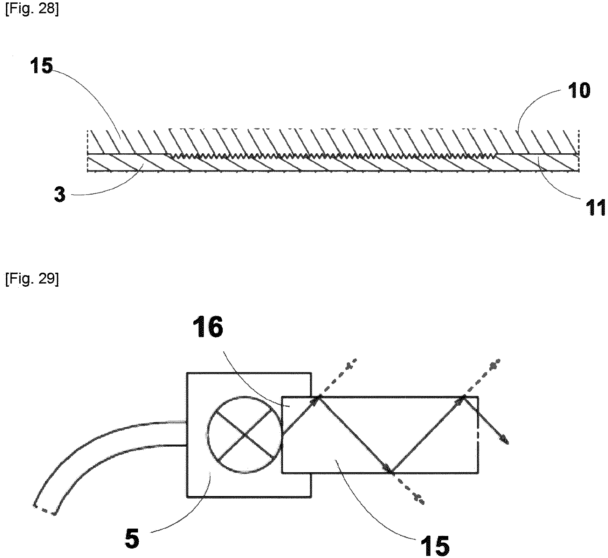

Une dernière mise en oeuvre de l'invention, illustrée à la figure 28, prévoit que le pan 15 fasse lui-même office de guide de lumière diffusant en mettant à profit les rugosités présentes sur la face interne 11 du pan 15, la lumière est alors renvoyée par la face interne 41 de la paroi 40 du caisson optique.

La source de lumière 5 est disposée le long d'une face latérale 16 du pan 15. Elle peut être formée à titre d'exemple, d'une pluralité de diodes électroluminescentes ou encore d'un guide de lumière diffusant et relié à une source lumineuse excentrée. La figure 29 illustre la circulation des rayons lumineux dans la paroi 15.

**Liste de références**

| | |
|---|---|
| 1 | Paroi lenticulaire de la pièce de carrosserie |
| 10 | Face externe de la paroi lenticulaire ou d'un pan |
| 100 | Microlentilles |
| 11 | Face interne de la paroi lenticulaire ou d'un pan |
| 12 | Face latérale de la paroi lenticulaire |
| 15 | Pan de la paroi lenticulaire |
| 16 | Bord/face latérale d'un pan |
| 17 | Partie galbée d'un pan |
| 18 | Support de la paroi lenticulaire |
| 19 | Logement bord d'un pan et/ou pour une source lumineuse |
| 110 | Motifs tridimensionnels. |
| 2 | Image holographique. |
| 20 | Boite enveloppante de l'image holographique virtuelle. |
| 3 | Paroi écran surmoulée sur la face interne de la paroi lenticulaire. |
| 4 | Boîtier optique. |
| 40 | Paroi du caisson optique |
| 400 | Face avant de véhicule |
| 41 | Face interne de la paroi inférieure. |
| 42 | Nappe émettrice de lumière. |
| 5 | Émetteur de lumière/Diode électroluminescente. |
| 6 | Face avant de véhicule. |
| 61 | Calandre |
| 62 | Pièce de carrosserie comportant un dispositif holographique. |
| 8 | Espace entre deux pans |
| 9 | Montant disposé dans ou en regard de l'espace |
| 40 | Nappe émettrice de lumière. |
| e | Épaisseur de la paroi lenticulaire |
| 200 | Peau de pare-chocs |
| 300 | Pièce de carrosserie |
| 310 | Boîtier de la pièce de carrosserie |
| 320 | Paroi de protection de la pièce de carrosserie |
| $p_1$, $p'_1$ | Pas des microlentilles sur la face externe. |

| p$_2$, p'$_2$ | Pas des motifs sur la face interne. |
| P$_{reduct}$ | Pas réduit des motifs de la face interne. |
| FM1, FM2, FM3, FM4 | Fractions de motifs. |
| d | Déphasage des portions de motifs. |
| K | Coefficient d'agrandissement. |
| N | Nombre de motifs selon une direction (longitudinale ou transversale). |
| n | Indice de réfraction de la paroi en plastique lenticulaire. |
| n' | Indice de réfraction de la paroi de protection. |
| R | Rayon des microlentilles. |
| C | Centre de courbure d'une microlentille. |
| S | Sommet du dioptre d'une microlentille. |
| A | Position de l'objet. |
| A' | Position de l'image. |
| L | ligne directrice de positionnement des pans |
| Γ | Taille d'un motif holographique. |
| h | Hauteur entre la face extérieure et le plan de formation de l'image holographique. |
| O, P | Observateurs. |
| Q | Points de rencontre des faisceau lumineux avec les motifs de la face interne. |

**Revendications**

1.  Pièce de carrosserie (300) de véhicule automobile comprenant une paroi lenticulaire (1) en matière plastique moulée transparente comprenant une face externe (10) et une face interne (11) opposées entre elles, la face externe (11) formant un réseau de microlentilles (100) sensiblement sphériques d'un rayon de courbure donné, disposées selon un premier pas donné (p1, p'1), la face interne supportant un réseau de motifs tridimensionnels (110) disposés selon un second pas donné (p2, p'2), **caractérisée en ce que** la paroi lenticulaire (1) est constituée par un ensemble de pans (15), chaque pan (15) étant indépendant des autres pans (15) et comprenant une partie de la face externe (10) et une partie de la face interne (10) de la paroi lenticulaire (1).

2.  Pièce de carrosserie (300) selon la revendication 1, dans laquelle au moins deux pans (15) successifs présentent un bord (16) en regard l'un de l'autre de forme complémentaire.

3.  Pièce de carrosserie (300) selon la revendication 1 ou 2, dans laquelle la face interne (11) d'au moins un des pans (15) est superposée au moins partiellement à la face externe (10) d'un pan (15) adjacent.

4.  Pièce de carrosserie (300) selon l'une des revendications 1 à 3, dans laquelle la paroi lenticulaire (1) comprend au moins un groupe de pans (15), où chaque pan (15) d'un même groupe comprend au moins une caractéristique choisie dans le groupe constitué par : au moins un bord (16) disposé en regard d'un autre pan (15) du groupe, une forme commune, au moins une dimension commune, un réseau de microlentilles (100) commun et un réseau de motifs tridimensionnels (110) commun.

5.  Pièce de carrosserie (300) selon l'une des revendications 1 à 4, dans laquelle au moins deux pans (15) sont identiques.

6.  Pièce de carrosserie (300) selon l'une des revendications 1 à 5, dans laquelle au moins deux pans (15) successifs présentent une orientation différente.

7.  Pièce de carrosserie (300) selon l'une des revendications 1 à 6, comprenant en outre au moins une source de lumière (5), dans laquelle chaque pan (15) est éclairé par ladite au moins une source de lumière (5) émettant une lumière au travers d'au moins un de leurs bords (16) respectifs.

8.  Pièce de carrosserie (300) selon l'une des revendications 1 à 7, dans laquelle au moins deux pans (15) adjacents de la paroi lenticulaire (1) sont espacés l'un de l'autre et définissent un espacement (8), et où un montant (9) est disposé dans ledit espacement (8) ou en regard dudit espacement (8).

9.  Pièce de carrosserie (300) selon l'une des revendications 1 à 8, dans laquelle au moins deux pans adjacents présentent un réseau de motifs tridimensionnels et un réseau de microlentilles continus d'un pan à l'autre, de sorte à faire apparaître une image continue entre les deux pans.

10. Pièce de carrosserie (300) selon l'une des revendications 1 à 9, comprenant en outre une paroi de protection disposée devant la paroi lenticulaire et comprenant au moins une zone transparente de manière que la paroi lenticulaire puisse être aperçue à travers.

[Fig. 1]

[Fig. 2]

[Fig. 3]

[Fig. 4]

15

**A**

15

**B**

[Fig. 5]

[Fig. 6]

[Fig. 7]

[Fig. 8]

[Fig. 9]

[Fig. 10]

[Fig. 11]

300

310

19

1

15

15

18

19

320

Z

X    Y

[Fig. 12]

[Fig. 13]

[Fig. 14]

[Fig. 15]

[Fig. 16]

[Fig. 17]

[Fig. 18]

[Fig. 19]

EP 4 269 182 A1

[Fig. 20]

28

[Fig. 21]

[Fig. 22]

[Fig. 23]

[Fig. 24]

EP 4 269 182 A1

[Fig. 25]

15

10

11

[Fig. 26]

15

41

10

5

4

11

40

[Fig. 27]

15

41

42

10

4

40

11

31

[Fig. 28]

[Fig. 29]

Europäisches
Patentamt

European
Patent Office

Office européen
des brevets

# RAPPORT DE RECHERCHE EUROPEENNE

Numéro de la demande

EP 23 17 0467

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KR 2018 0078766 A (SL CORP [KR]) 10 juillet 2018 (2018-07-10) * alinéas [0015] – [0034], [0078] – [0107]; figures 5,6,12-18 * ----- | 1-10 | INV. B60R19/52 B32B3/30 G02B3/00 G02B30/27 |
| X | KR 2018 0078722 A (SL CORP [KR]) 10 juillet 2018 (2018-07-10) * alinéa [0097] – alinéa [0115]; figures 5,6,13-16 * ----- | 1-10 | |
| A | WO 2019/219770 A1 (PLASTIC OMNIUM CIE [FR]) 21 novembre 2019 (2019-11-21) * le document en entier * ----- | 1-10 | |
| A | WO 2020/074530 A1 (PLASTIC OMNIUM CIE [FR]) 16 avril 2020 (2020-04-16) * le document en entier * ----- | 1-10 | |
| A | US 6 381 071 B1 (DONA MARINUS JOSEPHUS JAKOBUS [NL] ET AL) 30 avril 2002 (2002-04-30) * colonne 3, ligne 66 – colonne 5, ligne 32; figures 1-4 * ----- | 1-10 | DOMAINES TECHNIQUES RECHERCHES (IPC) B60R B32B G02B |

Le présent rapport a été établi pour toutes les revendications

| Lieu de la recherche | Date d'achèvement de la recherche | Examinateur |
|---|---|---|
| Berlin | 31 août 2023 | Topolski, Jan |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

## ANNEXE AU RAPPORT DE RECHERCHE EUROPEENNE
## RELATIF A LA DEMANDE DE BREVET EUROPEEN NO.

EP 23 17 0467

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-08-2023

| Document brevet cité au rapport de recherche | Date de publication | Membre(s) de la famille de brevet(s) | Date de publication |
|---|---|---|---|
| KR 20180078766 A | 10-07-2018 | AUCUN | |
| KR 20180078722 A | 10-07-2018 | AUCUN | |
| WO 2019219770 A1 | 21-11-2019 | FR 3081133 A1 | 22-11-2019 |
| | | WO 2019219770 A1 | 21-11-2019 |
| WO 2020074530 A1 | 16-04-2020 | CN 112823296 A | 18-05-2021 |
| | | EP 3864444 A1 | 18-08-2021 |
| | | FR 3087015 A1 | 10-04-2020 |
| | | US 2021382321 A1 | 09-12-2021 |
| | | WO 2020074530 A1 | 16-04-2020 |
| US 6381071 B1 | 30-04-2002 | AR 034397 A1 | 25-02-2004 |
| | | BR 0007172 A | 04-09-2001 |
| | | CN 1338062 A | 27-02-2002 |
| | | EP 1141766 A1 | 10-10-2001 |
| | | JP 2003510648 A | 18-03-2003 |
| | | US 6381071 B1 | 30-04-2002 |
| | | WO 0123943 A1 | 05-04-2001 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- WO 2016174917 A
- JP 2010256807 B
- FR 3087015